# EUROPEAN PATENT SPECIFICATION

(11) **EP 2 782 657 B1**
(45) Date of publication and mention of the grant of the patent: **28.12.2016**
(21) Application number: 12798183.5
(22) Date of filing: 13.11.2012
(51) Int. Cl.: B01D 53/04, F24F 3/16, F24F 7/06

(54) **DISTRIBUTED BUILDING-INTEGRATED CARBON DIOXIDE EXTRACTION SYSTEM REDUCING FRESH AIR REQUIREMENTS**
IN EIN GEBÄUDE INTEGRIERTES VERTEILTES KOHLENDIOXIDEXTRAKTIONSSYSTEM FÜR REDUZIERTEN FRISCHLUFTBEDARF
SYSTÈME D'EXTRACTION DE DIOXYDE DE CARBONE RÉPARTI INTÉGRÉ DANS UN BÂTIMENT, CONÇU POUR RÉDUIRE LES BESOINS EN AIR NEUF

(30) Priority: 25.11.2011 CH 18852011
(43) Date of publication of application: 01.10.2014
(73) Proprietor: Climeworks AG, 8050 Zürich (CH)
(72) Inventor: WURZBACHER, Jan Andre, CH-8037 Zürich (CH); GEBALD, Christoph, CH-8006 Zürich (CH)
(74) Representative: Bremi, Tobias Hans
(86) International application number: PCT/EP2012/072517
(87) International publication number: WO 2013/075981

(56) References cited:
- EP-A1- 0 816 225
- JP-A- 2009 019 788
- US-A1- 2011 277 490
- DATABASE WPI Week 199441 Thomson Scientific, London, GB; AN 1994-328874 XP002692594, & JP 6 253682 A (KANEBO LTD) 13 September 1994 (1994-09-13)

## Description

### FIELD

The present invention relates to carbon dioxide capture systems deployed inside buildings to remove carbon dioxide or carbon dioxide and water vapor from room air and transport it in concentrated form out of the building.

### BACKGROUND

Worldwide, most of the modern commercial buildings, but also an increasing share of private buildings, are equipped with ventilation and air conditioning building systems. These systems fulfill four major functions:
(I) Room temperature regulation
(II) Room air humidity regulation
(III) Removal of odors/pollutants from the room air
(IV) Removal of carbon dioxide from inside the building

Most conventional building systems achieve these functions by circulating large amounts of air (i) within the building between the individual rooms and one or several central air handling units (AHUs), and (ii) between the inside and outside of the building, i.e., by introducing large amounts of fresh air into the building and venting a corresponding amount of air from inside the building to the environment.

The air circulation within the entire building and the introduction of large amounts of fresh air imply two major disadvantages: (i) The installation of large air ducts, which are necessary for the circulation of large air volume flows at tolerable flow velocities within the building, requires a lot of extra building height. Typically, about one fifth of the building height is occupied by building systems, while ventilation and air conditions systems make up a major share of these installations. For example, for an office room of 200 m² ground area occupied with 25 people the introduction of approximately 1000 m³ fresh air per hour is required in order to remove the carbon dioxide exhaled by the occupants and keep the carbon dioxide content in the room at a constant, tolerable level, if no other means for carbon dioxide removal are applied. This in turn requires an air duct of at least 0.1 m² cross section (and a corresponding contribution to the cross section of any main ducts required for the fresh air supply of this room), assuming a maximum allowable flow velocity of 3 m/s within the duct in order to keep noise emissions and pressure drop below a tolerable limit. (ii) A lot of power is required in the form of heating/cooling power for the temperature regulation of the introduced fresh air, cooling power for the humidity regulation of the introduced fresh air, and ventilation power for air circulation, of which only a portion can be eliminated by recuperation. Especially in humid climate regions the energy for dehumidification of fresh air accounts for a major share of a complete building's energy consumption.

However, recent developments in building technologies have shown that functions (I) - (III) above can be achieved without circulating large amounts of the air contained in a building between the single rooms and a central AHU and with a significantly smaller amount of introduced fresh air than that required to keep the carbon dioxide content of the air at a constant level, i.e., fulfill function (IV) above. For example, this can be achieved by using filtering systems and convective/radiative heating and cooling systems.

On the other hand, several technologies for capturing carbon dioxide from the air have recently been developed in the context of mitigating greenhouse gas emissions, providing carbon dioxide as a commodity, or using carbon dioxide for the production of synthetic fuels.

Some of these technologies are based on a cyclic adsorption/desorption process on solid, chemically functionalized sorbent materials. For example, in WO2010091831 a structure based on amine functionalized solid sorbent materials together with a cyclic adsorption/desorption process using this material for the extraction of carbon dioxide from ambient air is disclosed.

Therein, the adsorption process takes place at ambient conditions at which air is streamed through the sorbent material and the carbon dioxide contained in the air is partly chemically bound at the amine functionalized surface of the sorbent. During the subsequent desorption, the material is heated to about 50 - 110 °C and the partial pressure of carbon dioxide surrounding the sorbent is reduced by applying a vacuum or exposing the sorbent to a purge gas flow. Thereby, the previously captured carbon dioxide is removed from the sorbent material and obtained in a concentrated form.

JP2006275487 discloses a carbon dioxide removing air conditioning system. CN03126159 discloses a method for removing indoor CO2 and increasing oxygen and apparatus thereof. Both systems are not disclosed as a network of several decentralized carbon dioxide removal units deployed in the individual rooms of the building. Those systems therefore depend on a duct system for circulating the air between the individual rooms of the building and the carbon dioxide extraction system. Further, no solid sorbent structure containing flow channels is disclosed.

US 4 046 529 discloses a module for removing CO2 and/or moisture from an air stream within a breathable air circulation system with particular application to spacecraft vehicles. It does not disclose as a network of several decentralized carbon dioxide removal units.

US 2003 0015093 A1 discloses a gas adsorption and desorption apparatus comprising an adsorption layer containing adsorption media and a heat exchanger in thermal contact with the adsorption layer. It does not disclose as a network of several decentralized carbon dioxide removal units to remove CO2 from the individual rooms of a building.

US 2007 0089605 discloses a filtering method to remove impurities including CO2 from the air inside rooms or vehicles where the filter used to extract the carbon dioxide from the air stream is regenerated by heat. Also electric resistors included in the filter material for heating are disclosed. No network of several decentralized carbon dioxide removal units to remove CO2 from the individual rooms of a building is disclosed.

US 7 601 202 B2 discloses a method for depleting the amount of CO2 contained in the air of closed spaces by a membrane system. No adsorption based system is disclosed. According to this disclosure, the air is removed from the room to achieve CO2 depletion and the CO2 removal process is not conducted within the room. No network of several decentralized carbon dioxide removal units to remove CO2 from the individual rooms of a building is disclosed.

US 2004 0112211 A1 discloses a gas separation system attached to a central HVAC system removing, amongst other components, CO2 from the room air. No CO2 removal system within individual rooms is disclosed.

US 2011 0277490 A1 discloses a gas scrubbing system incorporated in a central HVAC system that removes gases such as CO2 out of circulating air. No CO2 removal system within individual rooms is disclosed.

### OBJECTIVE OF THE INVENTION

One objective of the present invention is keeping the carbon dioxide content within the rooms of a building within tolerable limits (i.e. fulfill function (IV) above), while avoiding the requirements of (i) circulating large amounts of air between the rooms of the building and one or several AHUs, and (ii) introducing such large amounts of fresh air into the rooms of the building as would be required in order to remove the carbon dioxide produced in the building by sole dilution with fresh air.

Another objective of the present invention is reducing the extra building height requirement for air ducts necessary for air circulation between the rooms of the building and one or several AHUs.

Another objective of the present invention is minimizing the energy requirements associated to the heating or cooling and/or dehumidification of fresh air introduced into the building.

### SUMMARY/DESCRIPTION OF THE INVENTION

The present invention describes a building according to claim 1 and a process according to claim 10 for extracting carbon dioxide or carbon dioxide and water vapor from room air inside buildings. It uses recent developments in carbon dioxide capture technology to create a novel building-integrated system suitable to reduce the required amount of fresh air introduced into the building and eliminate the need to circulate large amounts of air between the rooms of the building and one or several AHUs.

The carbon dioxide or carbon dioxide and water vapor extraction is achieved in a two-step adsorption/desorption process on a solid sorbent material. The adsorption takes place at ambient conditions, e.g. at room temperature, i.e., in the range of 10 - 35 °C and at 0.9 to 1.1 bar absolute pressure. After the adsorption of carbon dioxide or carbon dioxide and water vapor the sorbent material can be regenerated or desorbed by heating it up to e.g. 50 - 110 °C and reducing the absolute pressure around the sorbent material to e.g. 1 - 250 mbar_{abs}, i.e., apply a vacuum, and/or exposing the material to a purge gas flow. If the desorption is achieved by heating the sorbent and applying a vacuum, the overall cyclic process is referred to as temperature-vacuum swing (TVS) process. If the desorption is achieved by heating the sorbent and exposing it to a purge gas flow, the overall cyclic process is referred to as temperature-concentration swing (TCS) process.

In a specific TVS process configuration, the sorbent contained in some type of container is exposed e.g. to an air flow for 0.5 to 16 hours at room temperature and atmospheric pressure (adsorption). Thereupon the container is evacuated to 1 - 250 mbar_{abs} by a vacuum pump/vacuum line and the sorbent is heated to 50 - 110 °C during 5 - 120 minutes. The gas stream leaving the container being sucked off by the vacuum pump/vacuum line (the "desorption stream") contains 0.5 to 100% carbon dioxide, the remainder being air and/or water vapor. The air content of the desorption stream is caused by air remainders in the system volume after evacuation and air penetrating the container through leaks and/or intended openings during desorption.

In a further TCS process configuration, the sorbent contained in some type of container is exposed to an air flow for 0.5 to 16 hours at room temperature and atmospheric pressure (adsorption). Thereupon the sorbent is heated to 50 - 110 °C during 5-120 minutes and exposed to a purge gas flow. After passing the sorbent material, the purge gas flow leaves the container through one or several outlets forming the desorption stream. This desorption stream contains 0.1 to 100% carbon dioxide, the remainder being purge gas, air and/or water vapor. The purge gas can be room air penetrating the container through leaks and/or intended openings during desorption.

According to one embodiment of the invention the cycle times of the adsorption/desorption cycles are adapted to the occupancy cycles of the building. For example, in an office building which is only occupied for 10 hours during the day, the adsorption can take place during these 10 occupied hours, while the desorption can take place during night or non-occupied hours.

The sorbent material is a solid material capable of adsorbing carbon dioxide at its surface. It can be a porous support material which is chemically functionalized at its surface to provide chemical adsorption sites for carbon dioxide. E.g. the functional groups introduced at the surface are primary, secondary, and/or tertiary amine groups. Preferably the functional groups are introduced by covalent bonding to the surface of the sorbent material. The solid support material can be made of highly porous materials with a surface area of 0.5 - 2000 m²/g, preferably 5 - 500 m²/g.

In one embodiment of the invention the sorbent material is made from cellulose nanofibers which are preferably chemically functionalized with aminosilanes at their surface.

The sorbent material can also be capable to adsorb water contained in the air stream passing through it.

According to the present invention, the extraction of carbon dioxide or carbon dioxide and water vapor from room air inside buildings is achieved by multiple carbon dioxide extraction units deployed in at least one or several of the individual rooms of the building which directly extract the carbon dioxide from the air contained in the room in which they are installed. These units are usually not connected to air ducts circulating air between the individual rooms of the building or between the individual rooms of the building and one or several centralized AHUs, but rather connected to a network of small pipes which removes the stream of concentrated carbon dioxide (desorption stream) produced by the individual units from the inside of the building. This network of small pipes can be connected to a centralized vacuum pump system.

Such a decentralized system of carbon dioxide extraction units significantly reduces the required amount of fresh air, which would otherwise be required to remove the carbon dioxide contained in the room air by dilution. Instead of removing the carbon dioxide by venting room air with slightly increased carbon dioxide content to the environment of the building and replacing the vented air by fresh air, the carbon dioxide is extracted from the room air in the carbon dioxide extraction units and removed from the individual rooms in the form of a concentrated stream (the desorption stream). For example, if the carbon dioxide concentration in the desorption stream is 500 times higher than the maximum tolerable carbon dioxide concentration in the room air (e.g. 400'000 ppm instead of 800 ppm) the required volume flow for carbon dioxide removal from the room by the desorption stream is at least 500 times smaller than that required for carbon dioxide removal by venting room air to the building's environment. (In fact, it is even smaller, since in the case of venting room air, the vented air is replaced by the same amount of fresh air which introduces again carbon dioxide at the concentration level of the buildings environment, typically around 400 ppm, into the building. In the case of a desorption stream with 500 times higher carbon dioxide concentration, the carbon dioxide introduction by fresh air replacing the desorption stream is negligible.)

At the same time, room temperature regulation (function (I) above) can be achieved by convective/radiative heating systems installed in the individual rooms of the building and the removal of odors and/or pollutants (function (III) above) can be achieved by filtering systems installed in the individual rooms of the building. Further, due to reduced fresh air requirements the dehumidification requirements (function (II) above) are reduced. The remaining dehumidification requirements can either be achieved by circulating small amounts of room air between the individual rooms and one or several AHUs or by water vapor extraction from the room air in the individual rooms of the building, which can be achieved as a side effect by the carbon dioxide extraction units.

The reduction of the required fresh air amounts and/or the reduction or complete elimination of air circulating requirements between the individual rooms of the building or the individual rooms and one or several AHUs in turn allow for the installation of much smaller air ducts within the building. The network of small pipes removing the desorption stream from the building can have similar dimensions as water and electricity networks in the building and does not require significant extra building space for its installation. The building height required for air conditioning, heating, cooling, and ventilation systems can therefore be significantly reduced which can save significant construction costs.

Prior art (JP2006275487, CN03126159) suggests to use carbon dioxide removal systems within buildings but no network of distributed carbon dioxide extraction units extracting the carbon dioxide from the room air in the individual rooms of the building and producing a desorption stream of concentrated carbon dioxide which can be removed from the building through a system of small pipes is disclosed. This prior art is therefore not suitable to significantly reduce the required building height associated with the installation of air conditioning, heating, cooling, and ventilation systems.

In one embodiment of the present invention more water vapor is extracted from the room air by carbon dioxide extraction units than that amount required to keep the humidity level in the room air at a constant level. In this embodiment, the humidity level can be kept at a constant level by adding humidity to the room air, for example by spraying water into the air stream leaving the carbon dioxide extraction units during adsorption.

In a further embodiment of the invention the units are deployed at least in those rooms of the building or at least in the majority of those rooms of the building, in which carbon dioxide is produced, e.g., by human occupants.

According to one embodiment of the present invention, several carbon dioxide extraction units are operating in at least some of the building's rooms in a cycle time-shifted manner, i.e., while one or several units are in desorption mode, at least one of the units is in adsorption mode. This can allow for continuous, uninterrupted carbon dioxide adsorption despite the cyclic character of the process.

The carbon dioxide extraction units can be composed of a rigid or flexible case containing the sorbent structure and comprising an inlet and an exit for the air flow during adsorption and an outlet for the desorption stream. The sorbent structure can be a rigid structure containing flow channels to pass an air stream through. Such flow channels can be straight and such straight flow channels can have a width in one dimension of e.g. 0.1 - 2.5 cm.

According to one embodiment of this invention the case is composed of flexible vacuum bags as disclosed in WO2010091831.

According to one embodiment of this invention, the cases containing the sorbent structure comprise covers/lids at the inlet and exit for the air flow which are open during adsorption and are closed, e.g. automatically, during desorption. If the unit is operated under TVS conditions, the covers/lids can be sealed so as to maintain the vacuum inside the case during adsorption. If the unit is operated under TCS conditions, the covers/lids do not need to be perfectly sealed; rather, small leakages between the covers/lids and the case can allow for room air to pass through the sorbent material during desorption as purge gas. In another embodiment of the invention, the covers/lids contain small holes and/or slots to increase the room air purge gas flow during desorption. During adsorption, the air can be passed through the sorbent material by a fan attached to or close to the inlet of the case containing the sorbent material and/or by convection.

In a further embodiment of this invention the sorbent structure contains heating elements to provide the necessary heat for desorption. The heating elements can be integrated within the bulk of the sorbent material structure and/or attached to the outside of the sorbent material structure.

The heating elements can be electrically powered heating elements, preferably heating foils at least some of which are preferably permanently integrated within the bulk of the sorbent material structure and connected by cables to a control unit controlling the carbon dioxide extraction unit. The heating elements can be integrated into the sorbent structure during the production process of the sorbent structure.

The sorbent material used for the implementation of the present invention can have a limited life time, i.e., a life time that is shorter than that of the other components of the building system, e.g., the case containing the sorbent structure. The expected life time of the sorbent is between 0.5 and 5 years.

Further, different manufacturers of building systems offer a large variety of systems, for example ceiling panel systems, in which a carbon dioxide extraction system according to the present invention can be integrated. This results in various requirements on the form of the cases, including air inlets, air outlets, and connections to a desorption stream pipe system of the carbon dioxide extraction units.

According to one embodiment of this invention the sorbent material structure is produced in a standardized, packaged form that can fit into various geometric forms of the case containing the sorbent structure, which in turn can be integrated into various different building systems, for example ceiling panel systems. Further, the packaged sorbent structure units can easily be replaced after the end of their life time. Preferably, the packaged sorbent structures are enclosed in a foil or wrapping in a way that the inlet and exit openings of the flow channels remain open. Further, the packaged sorbent structures contain preferably an integrated heating structure, such as an electrically powered heating structure, even more preferably an electrically powered heating structure that can be connected to a controller by a cable that is integrated in the sorbent structure at one end. Preferably the electrically powered heating structure consists of heating foils.

According to one embodiment of the present invention the carbon dioxide extracting system is combined with a filtering unit deployed downstream of the air outlet of the carbon dioxide extracting unit. This unit can fulfill the functions of removing carbon dioxide from the room air as well as removing odors and pollutants from the room air. It can further fulfill the function of removing humidity from the room air.

### BRIEF DESCRIPTION OF THE DRAWINGS

Examples of embodiments of the invention are described in the following with reference to the drawings, which are for the purpose of illustrating the present embodiments of the invention and not for the purpose of limiting the same. In the drawings,
- Figure 1: shows a carbon dioxide extraction unit including a fan, covers/lids and an outlet for the desorption stream, which can be installed in a room of a building;
- Figure 2: shows the cross section of a sorbent structure including air flow channels contained in a carbon dioxide extraction unit;
- Figure 3: shows a carbon dioxide extraction unit installed at the ceiling of a room;
- Figure 4: shows pairs of sorbent plates enclosing heat foils with flow channels between the sorbent plates;
- Figure 5: shows the cross section of a cartridge-like sorbent package including flow channels, heating elements and an enclosing foil; and
- Figure 6: shows a building with four individual rooms, which are each equipped with a carbon dioxide extraction unit, which in turn are connected by a network of small pipes.

### DESCRIPTION OF PREFERRED EMBODIMENTS

### Example 1. Room with single carbon dioxide extraction unit.

According to one embodiment of the present invention a room of 10 m² ground area and 3 m room height, occupied with one person is equipped with one carbon dioxide extraction unit removing the carbon dioxide exhaled by the occupant (approximately 15 g/h) from the room air.

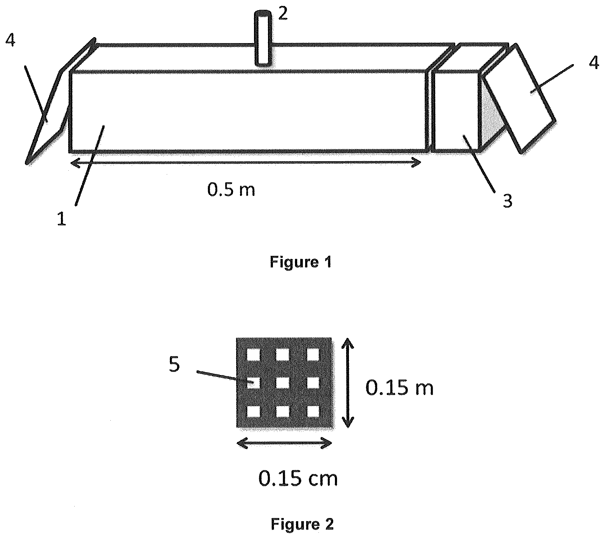

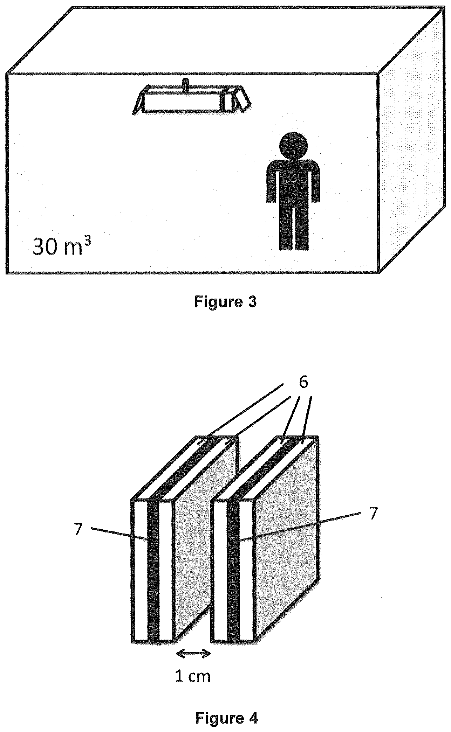

The unit (see Figure 1) has a size of approximately 0.5 m x 0.15 m x 0.15 m, is composed of a rigid case 1 containing the rigid sorbent structure featuring flow channels 5 (see Figure 2), and comprises a fan 3 to circulate the air through it as well as two covers 4 to close the case during desorption. The unit is mounted at the ceiling of the room (included in the ceiling panels) (see Figure 3) and has an outlet opening 2 for the desorption stream. It contains about 1 kg of sorbent material which is streamed through by a volume flow of approximately 40 m³/h during adsorption. The adsorption takes about 100 min, the desorption about 20 min. During desorption, the sorbent is heated to about 80 °C and the absolute pressure around the material is reduced to about 100 mbar by connecting the desorption stream outlet to a vacuum line. About 30 g of carbon dioxide are removed from the sorbent structure during each desorption.

### Example 2. Heating foils.

A sorbent structure (see Figure 4) which can be applied in a carbon dioxide extraction unit comprises pairs of sorbent plates 6. Each sorbent plate pair encloses an electrically powered heating foil 7 for providing the thermal energy for desorption. These heating foils allow for heating up the sorbent material to about 50 - 90 °C during desorption. Between the sorbent plates 7 there are flow channels of 1 cm width for the air flow to pass through during adsorption.

### Example 3. Packaged form of sorbent structure.

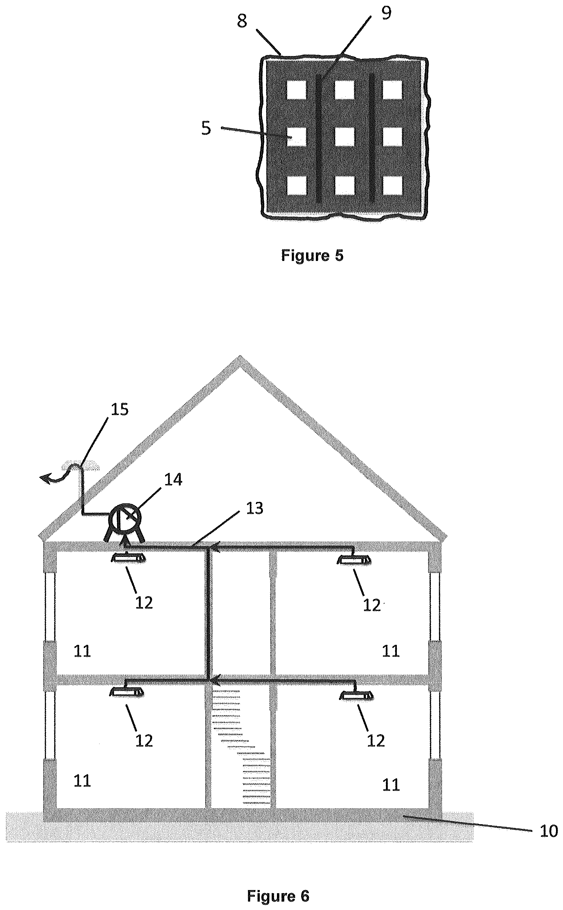

A cartridge-like sorbent package (see Figure 5) comprises the following elements
- rigid sorbent structure containing rectangular flow channels 5;
- heating elements 9 integrated into the sorbent structure connected to a cable which in turn can be connected to a controller; and
- a foil 8 enclosing the sorbent package providing protection to the outer surfaces of the sorbent structure for easy handling during installation and incorporation of the sorbent structure into various case types.

The flow channels allow for the air stream passing through the sorbent package during adsorption. The heating elements 9 allow for heating up the sorbent material to about 50 - 90 °C during desorption. The enclosing foil 8 allows for separating the sorbent package from the room air during desorption and/or for maintaining a vacuum around the sorbent package during desorption.

Example 4. Network of carbon dioxide capture units installed in the individual rooms of a building.

A building 10 contains four individual rooms 11 (see Figure 6). In each of the rooms a carbon dioxide extraction unit 12 is installed, which operates in cyclic adsorption/desorption mode. The units are dimensioned for occupancy of four persons per room, i.e., they can remove an average of 60 gram of carbon dioxide per hour from the room air each. The adsorption cycle takes about 100 min, the desorption about 20 min. The maximum tolerable carbon dioxide concentration in the room air is 800 ppm. Due to cyclic operation of the units, the carbon dioxide concentration varies between 400 ppm and 800 ppm during operation, while the rooms are occupied. The units are controlled by a control system that in turn measures the carbon dioxide content of the room air. The control system sets the units only in operation, if carbon dioxide removal is required, i.e., if the room is occupied and therefore the carbon dioxide level in the room air is increasing. This allows for an energy efficient operation, since the units are only operating if required.

During adsorption, the room air is circulated through the units by a fan, while parts of the carbon dioxide contained in the room air or parts of the carbon dioxide and water vapor contained in the room air are chemically bound at the surface of the sorbent material which is contained in the units. During desorption the sorbent material is heated up to 50 - 90 °C and the carbon dioxide that was adsorbed in the previous adsorption cycle is removed by an air flow (purge gas) of 2 - 30 liter per minute passing through the sorbent material and leaving the units through an outlet.

The outlets of all units are connected by a network of pipes 13 of 5 - 10 mm inner diameter. These pipes are integrated in the buildings walls and ceilings and do not require extra building space. The pipe network is connected to a pump 14 located on the upper floor of the building that sucks of the carbon dioxide or the carbon dioxide and water vapor of the units and vents through a main outlet 15 to the outside of the building.

The main advantage of this system over conventional ventilation and air conditioning systems is the fact that no extra building space for air ducts is required. If the carbon dioxide removal achieved by the carbon dioxide capture units in this example was achieved by introducing fresh air into the rooms of the building and venting the room air to the outside of the building, air ducts with a cross section of approximately 0.015 m² (e.g. 0.15 m x 0.1 m) would be required for each room, which would require extra building space. Further, main air ducts would be required connecting the air ducts of the individual rooms, which would require further extra building space.

The various embodiments described in relation to figure 1 to figure 6 refer to examples for the better understanding and description of the present invention. Of course the present invention is not at all limited to the described examples and embodiments and e.g. the described size of a carbon dioxide extraction unit, the various process conditions and parameters, the described absorbent material, etc. can be varied and adjusted according to the specific requirements within each individual room. Especially the given indication of dimension, such as the length of the extracting carbon dioxide unit, the structure flow channels, room dimension and distance between sorbent plates of the sorbent structure, are examples which can be vary according to the specific requirements. Also the shown sorbent structure and the chosen dimension of the flow channels, the specific example described in relation to figure 6, etc. refer to examples and can be again vary and completed by further equipments and devices according to the specific requirements. Important is that at least one or several of individual rooms within a building are equipped with at least one unit for the extraction of carbon dioxide from room air within a building. Each unit being connected to one or several individual pipe to remove the stream of concentrated carbon dioxide collected within the individual units from the inside of the building.

## Claims

1. Building with several individual rooms and with an arrangement extracting carbon dioxide from room air within the building, producing a stream of concentrated carbon dioxide with a concentration of 0.5% to 100% based on a cyclic adsorption/desorption process, such as a temperature-vacuum swing or a temperature-concentration swing process, on a solid sorbent material of a sorbent structure, **characterized by**
the arrangement
- being composed of multiple individual carbon dioxide extraction units deployed in several of the individual rooms of the building which carbon dioxide extraction units directly extract the carbon dioxide from the air contained in the room in which they are installed;
- the carbon dioxide extraction units being connected to small pipes which remove the stream of concentrated carbon dioxide collected within the individual carbon dioxide extraction units from the inside of the building; and
- the carbon dioxide extraction units being composed of a rigid or flexible case containing the sorbent material.

2. Building according to claim 1 of which the arrangement extracts not only carbon dioxide but also water vapor from the air contained in at least most of the individual rooms of the building and produces a stream of concentrated carbon dioxide with a concentration of 0.5% to 100% and water vapor.

3. Building according to one of the claims 1 or 2, **characterized in** the solid sorbent material containing amine groups as chemical adsorption sites.

4. Building according to one of the claims 1 to 3, **characterized in** the carbon dioxide extraction units being composed of a rigid structure containing flow channels to pass an air stream through and a heating structure to heat up the sorbent for the desorption of the captured carbon dioxide.

5. Building according to one of the claims 1 - 4, in which the sorbent structure contains straight flow channels with a width in one dimension of 0.1 to 2.5 cm.

6. Building according to one of the claims 1 - 3 in which the sorbent structure contains heating elements to provide the necessary heat for desorption which are e.g. integrated within the bulk of the sorbent material structure and which are e.g. electrically powered heating elements such as heating foils at least some of which are permanently integrated within the bulk of the sorbent material structure and connected by cables to a control unit controlling the carbon dioxide extraction unit.

7. Building according to one of the claims 1-6, **characterized in that** the case containing the sorbent structure is integrated within other building systems for temperature regulation and/or air conditioning and/or ventilation, like into panel systems such as e.g. into ceiling panel systems.

8. Building according to one of the claims 1-7, which is combined with a filtering system removing odors and/or pollutants from the room air, wherein the filtering system is installed downstream of an air outlet of the case containing the sorbent structure.

9. Building according to one of the claims 1 - 3, of which the sorbent structure can fit into various cases of different geometric form
- is enclosed in a foil or wrapping in a way that the inlet and exit openings of the flow channels remain open; and
- contains an integrated heating structure, such as an electrically powered heating structure, preferably an electrically powered heating structure that is connectable to a controller by a cable that is integrated in the sorbent structure at one end.

10. Process for extracting carbon dioxide from room air within the building according to any of claim 1 - 9 by producing a stream of concentrated carbon dioxide with a concentration of 0.5 % to 100 % based on a cyclic adsorption/desorption process such as a temperature vacuum swing or a temperature concentration swing process on a solid sorbent material, the process comprising,
- room air being streamed through the sorbent material in the carbon dioxide extraction units during adsorption while at least parts of the carbon dioxide contained in the room air or at least parts of the carbon dioxide and water vapor contained in the room air are chemically and physical, respectively, bound at the surface of the sorbent material;
- the sorbent material being enclosed in a containment of the carbon dioxide extraction units separating it from the room air during desorption;
- the sorbent material being heated up and either exposed to a vacuum or to a purge gas flow during desorption in the carbon dioxide extraction units;
- the desorbed carbon dioxide being continuously removed from the containment of the carbon dioxide extraction units during desorption through an outlet; and
- the sorbent material being reused for multiple adsorption/desorption cycles.

11. Process according to claim 10, in which the sorbent material is heated to 50 - 110°C and the absolute pressure around the sorbent is reduced to 1 - 250 mbar for desorption and the desorbed carbon dioxide or the desorbed carbon dioxide and water vapor is/are sucked off the case through an outlet which is connected to network of small pipes.

12. Process according to one of the claims 10 or 11, in which the sorbent is heated to 50 - 110 °C and exposed to a purge gas flow during desorption, where the purge gas is preferably room air which more preferably enters the case in which the sorbent structure is contained through the air inlet and outlet and/or holes and/or slots included in the case for that purpose and in which the purge gas together with the desorbed carbon dioxide or the desorbed carbon dioxide and water vapor are sucked off the case through an outlet which is connected to network of small pipes.

13. Process according to one of the claims 10 to 12, in which several carbon dioxide extraction units are operating in at least some of the building's individual rooms in a cycle time-shifted manner the way that always at least one of the units is in adsorption mode.

14. Process according to one of the claims 10 to 13, in which the cycle times of the adsorption/desorption cycles are adapted to the occupancy cycles of the building in a way that adsorption takes place when the building is majorly occupied and desorption takes place when it is majorly unoccupied.

## Patentansprüche

1. Gebäude mit mehreren individuellen Räumen und mit einer Anordnung, welche Kohlenstoffdioxid von Raumluft innerhalb des Gebäudes extrahiert, wobei ein Strom von konzentriertem Kohlenstoffdioxid mit einer Konzentration von 0.5% bis 100% basierend auf einem zyklischen Adsorptions-/Desorptionsverfahrens erzeugt wird, wie ein Temperatur-Vakuum Wechselverfahren oder ein Temperatur-Konzentration Wechselverfahren, auf einem festen Sorptionsmaterial einer Sorptionsmittelstruktur, **dadurch gekennzeichnet, dass**
- die Anordnung aus einer Vielzahl von individuellen Kohlenstoffdioxidextraktionseinheiten besteht, welche in mehreren der individuellen Räumen des Gebäudes eingesetzt sind, welche Kohlenstoffdioxidextraktionseinheiten das Kohlenstoffdioxid direkt aus der im Raum enthaltenen Luft extrahieren, in welchem diese installiert sind;
- die Kohlenstoffdioxidextraktionseinheiten mit kleinen Rohren verbunden sind, welche den Strom von konzentriertem Kohlenstoffdioxid, welches innerhalb der individuellen Kohlenstoffdioxidextraktionseinheiten vom Gebäudeinneren gesammelt wird, entfernen; und
- die Kohlenstoffdioxidextraktionseinheiten aus einem starren oder flexiblen Gehäuse bestehen, welches das Sorptionsmaterial enthält.

2. Gebäude gemäss Anspruch 1, dessen Anordnung nicht nur Kohlenstoffdioxid extrahiert, sondern auch Wasserdampf aus der Luft, welcher in zumindest den meisten der individuellen Räumen des Gebäudes enthalten ist, und einen Strom von konzentrierten Kohlenstoffdioxid mit einer Konzentration von 0.5% bis 100% und Wasserdampf erzeugt.

3. Gebäude gemäss einem der Ansprüche 1 oder 2, **dadurch gekennzeichnet, dass** das feste Sorptionsmaterial Amingruppen als chemische Adsorptionsstellen enthält.

4. Gebäude gemäss einem der Ansprüche 1 bis 3, **dadurch gekennzeichnet, dass** die Kohlenstoffdioxidextraktionseinheiten aus einer starren Struktur bestehen, welche Strömungskanäle, um einen Luftstrom durchzuleiten, und eine Heizstruktur, um das Sorptionsmittel für die Desorption des eingefangenen Kohlenstoffdioxids aufzuheizen, enthält.

5. Gebäude gemäss einem der Ansprüche 1 bis 4, in welchem die Sorptionsmittelstruktur gerade Strömungskanäle mit einer Breite in einer Dimension von 0.1 bis 2.5 cm enthält.

6. Gebäude gemäss einem der Ansprüche 1 bis 3, in welchem die Sorptionsmittelstruktur Heizelemente enthält, um die für die Desorption benötige Hitze bereitzustellen, welche beispielsweise innerhalb der Masse der Sorptionsmaterialstruktur integriert sind, und welche beispielsweise elektrisch betriebene Heizelemente, wie Heizfolien, sind, von welchen zumindest einige permanent innerhalb der Masse der Sorptionsmaterialstruktur integriert sind und über Kabel mit einer Regeleinheit verbunden sind, welche die Kohlenstoffdioxidextraktionseinheit regelt.

7. Gebäude gemäss einem der Ansprüche 1 bis 6, **dadurch gekennzeichnet, dass** das Gehäuse, welches die Sorptionsmittelstruktur enthält, innerhalb anderer Gebäudesystemen zur Temperaturregelung und/oder Klimatisierung und/oder Belüftung integriert ist, wie in Paneelsystemen wie beispielsweise in Deckenpaneelsystemen.

8. Gebäude gemäss einem der Ansprüche 1 bis 7, welches mit einem Filtersystem kombiniert ist, welches Gerüche und/oder Verunreinigungen aus der Raumluft entfernt, wobei das Filtersystem stromabwärts eines Luftauslasses des Gehäuses, welches die Sorptionsmittelstruktur enthält, installiert ist.

9. Gebäude gemäss einem der Ansprüche 1 bis 3, dessen Sorptionsmittelstruktur in verschiedene Gehäuse von unterschiedlicher geometrischer Form hineinpassen kann,
- ist in einer Folie oder Umwicklung in einer Weise eingeschlossen, dass die Einlass-und Auslassöffnungen der Strömungskanäle geöffnet bleiben; und
- enthält eine integrierte Heizstruktur, wie beispielsweise eine elektrisch betriebene Heizstruktur, vorzugsweise eine elektrisch betriebene Heizstruktur welche über ein Kabel mit einem Regler verbindbar ist, welcher an einem Ende in die Sorptionsmittelstruktur integriert ist.

10. Verfahren zur Extraktion von Kohlenstoffdioxid aus Raumluft innerhalb des Gebäudes gemäss einem der Ansprüche 1 bis 9, indem ein Strom von konzentriertem Kohlenstoffdioxid mit einer Konzentration von 0.5% bis 100% basierend auf einem zyklischen Adsorptions-/Desorptionsverfahren erzeugt wird, wie ein Temperatur-Vakuum Wechselverfahren oder ein Temperatur-Konzentration Wechselverfahren, auf einem festen Sorptionsmaterial, wobei das Verfahren aufweist
- Strömen von Raumluft durch das Sorptionsmaterial in den Kohlenstoffdioxidextraktionseinheiten während der Adsorption, während zumindest Teile des Kohlenstoffdioxids, welches in der Raumluft enthalten ist, oder zumindest Teile des Kohlenstoffdioxids und Wasserdampfs, welche in der Raumluft enthalten sind, chemisch beziehungsweise physikalisch an der Oberfläche des Sorptionsmaterials gebunden werden;
- Einschliessen des Sorptionsmaterials in einem Behältnis der Kohlenstoffdioxidextraktionseinheiten, welches es während der Desorption von der Raumluft trennt;
- Aufheizen des Sorptionsmaterials und entweder Aussetzen an ein Vakuum oder an einen Spülgasstrom während der Desorption in den Kohlenstoffdioxidextraktionseinheiten;
- Kontinuierliches Entfernen des desorbierten Kohlenstoffdioxids aus dem Behältnis der Kohlenstoffdioxidextraktionseinheiten während der Desorption durch einen Auslass; und
- Wiederverwenden des Sorptionsmaterials für mehrere Adsorptions-/Desorptionszyklen.

11. Verfahren gemäss Anspruch 10, in welchem das Sorptionsmaterial für die Desorption auf 50 - 110°C aufgeheizt wird und der absolute Druck um das Sorptionsmittel auf 1 - 250 mbar reduziert wird und das desorbierte Kohlenstoffdioxid oder das desorbierte Kohlenstoffdioxid und der Wasserdampf durch einen Auslass, welcher mit einem Netzwerk von kleinen Rohren verbunden ist, aus dem Gehäuse abgesaugt wird/werden.

12. Verfahren gemäss einem der Ansprüche 10 oder 11, in welchem das Sorptionsmittel während der Desorption auf 50 - 110°C aufgeheizt und einem Spülgasstrom ausgesetzt wird, wobei das Spülgas bevorzugt Raumluft ist welche insbesondere bevorzugt durch den Lufteinlass und Auslass und/oder Löcher und/oder Schlitze, welche für diesen Zweck im Gehäuse enthalten sind, in das Gehäuse eintritt, in welchem die Sorptionsmittelstruktur enthalten ist, und in welchem das Spülgas zusammen mit dem desorbierten Kohlenstoffdioxid oder dem desorbierten Kohlenstoffdioxid und dem Wasserdampf durch einen Auslass, welcher mit einem Netzwerk von kleinen Rohren verbunden ist, aus dem Gehäuse abgesaugt werden.

13. Verfahren gemäss einem der Ansprüche 10 bis 12, in welchem mehrere Kohlenstoffdioxidextraktionseinheiten in mindestens einigen der individuellen Räumen des Gebäudes in einer zyklischen zeitversetzten Weise in Betrieb sind, auf die Art, dass immer mindestens eine der Einheiten im Adsorptionsmodus ist.

14. Verfahren gemäss einem der Ansprüche 10 bis 13, in welchem die zyklischen Zeiten der Adsorptions-/Desorptionszyklen an die Belegungszyklen des Gebäudes angepasst sind, in einer Weise, dass Adsorption stattfindet, wenn das Gebäude mehrheitlich belegt ist, und dass Desorption stattfindet, wenn es mehrheitlich unbelegt ist.

## Revendications

1. Un bâtiment ayant plusieurs pièces individuelles et ayant un agencement extrayant le dioxyde de carbone de l'air des pièces dans le bâtiment, produisant un flux de dioxyde de carbone concentré ayant une concentration de 0.5% à 100% à base d'un procédé d'adsorption/désorption cyclique, tel qu'un procédé à fluctuation de température-vide ou de température-concentration, sur un matériau sorbant solide ayant une structure sorbante, **caractérisé en ce que** l'agencement
- est composé de plusieurs unités individuelles d'extraction de dioxyde de carbone déployées dans plusieurs pièces individuelles du bâtiment, lesquelles unités d'extraction de dioxyde de carbone extraient directement le dioxyde de carbone de l'air contenu dans la pièce dans laquelle elles sont installées ;
- les unités d'extraction de dioxyde de carbone sont connectées à des petites conduites qui éliminent le flux de dioxyde de carbone concentré collecté dans les unités d'extraction de dioxyde de carbone individuelles de l'intérieur du bâtiment ; et
- et les unités d'extraction de dioxyde de carbone sont constituées d'un boîtier souple ou rigide contenant le matériau sorbant.

2. Bâtiment selon la revendication 1, duquel l'agencement non seulement extrait du dioxyde de carbone mais aussi de la vapeur d'eau de l'air contenu dans au moins la majorité des pièces individuels du bâtiment et produit un flux de dioxyde de carbone concentré ayant une concentration de 0.5% à 100% et de vapeur d'eau.

3. Bâtiment selon une des revendications 1 ou 2, **caractérisé en ce que** le matériau solide sorbant contient des groupes amines comme sites d'adsorption chimique.

4. Bâtiment selon une des revendications 1 à 3, **caractérisé en ce que** les unités d'extraction de dioxyde de carbone sont composées d'une structure rigide contenant des canaux à flux pour faire traverser à travers un courant d'air et d'une structure de chauffage pour chauffer le sorbant pour la désorption du dioxyde de carbone capturé.

5. Bâtiment selon une des revendications 1 à 4, dans lequel la structure sorbante contient des canaux à flux rectilignes avec une largeur dans une dimension de 0.1 à 2.5 cm.

6. Bâtiment une des revendications 1 à 3, dans lequel la structure sorbante contient des éléments de chauffage pour fournir la chaleur nécessaire pour une désorption, qui sont par exemple intégrés dans le volume de la structure du matériau sorbant et qui par exemple sont des éléments de chauffage alimentés électriquement comme des feuilles de chauffage desquelles au moins quelques-unes sont intégrées de manière permanente dans le volume de la structure du matériau sorbant et connectées par câble à une unité de control contrôlant l'unité d'extraction de dioxyde de carbone.

7. Bâtiment selon une des revendications 1 à 6, **caractérisé en ce que** le boîtier contenant la structure sorbante est intégré dans des autres systèmes de bâtiment pour la régulation de température et/ou conditionnement d'air et/ou ventilation, comme des systèmes de panneau comme par exemple des systèmes à panneau de plafond.

8. Bâtiment selon une des revendications 1 à 7, qui est combiné avec un système de filtration éliminant les odeurs et/ou polluants de l'air de pièce, dans lequel le système de filtration est installé en aval d'une sortie d'air du boîtier contenant la structure sorbante.

9. Bâtiment selon une des revendications 1 à 3, duquel la structure sorbante peut rentrer dans de divers boîtiers ayant des différentes formes géométriques est enfermée dans une feuille ou enveloppe de manière que les ouvertures d'entrée et sortie des canaux à flux restent ouvertes ; et contient une structure de chauffage intégré, comme une structure de chauffage alimentée électriquement, préférablement une structure de chauffage alimentée électriquement qui est connectable à un contrôleur par un câble qui est intégré dans la structure sorbante au niveau d'une extrémité.

10. Procédé pour l'extraction de dioxyde de carbone de l'air d'une pièce dans un bâtiment selon l'une quelconque des revendications 1 à 9 en produisant un courant de dioxyde de carbone concentré avant un concentration de 0.5% à 100% à base d'un procédé d'adsorption/désorption cyclique tel qu'un un procédé à fluctuation de température-vide ou de température-concentration, sur un matériau sorbant solide, le procédé comprenant
- de l'air de pièce étant dirigé à travers un matériau sorbant dans les unités d'extraction de dioxyde de carbone durant l'adsorption pendant que au moins une partie du dioxyde de carbone contenu dans l'air de pièce ou au moins une partie du dioxyde de carbone et vapeur d'eau contenus dans l'air de pièce sont chimiquement est physiquement, respectivement, liés à la surface du matériau sorbant ;
- le matériau sorbant étant eveloppé dans un conteneur de l'unité d'extraction de dioxyde de carbone séparant celui-ci de l'air de pièce durant la désorption ;
- le matériau sorbant étant chauffé et ou bien exposé à un vide ou à un flux de gaz de purge durant la désorption dans l'unité d'extraction de dioxyde de carbone ;
- le dioxyde de carbonne désorbé étant continuellement éliminé du conteneur de l'unité d'extraction de dioxyde de carbone durant la désorption à travers une sortie ; et
- le matériau sorbant étant réutilisé pour des multiples cycles d'adsorption/désorption.

11. Procédé selon la revendication 10, dans lequel le matériau sorbant est chauffé à 50 à 110° Celsius et la pression absolue entourant le sorbant est réduite à 1 à 250 millibar pour la désorption et le dioxyde de carbone désorbé ou le dioxyde de carbone désorbé et la vapeur d'eau est / sont aspirés du boîtier à travers une sortie qui est connectée à un réseau de petites conduites.

12. Procédé selon une des revendications 10 ou 11, dans lequel le sorbant est chauffé à 50 à 110 ° Celsius et exposé à un flux de gaz de purge pendant la désorption, où le gaz de purge est préférablement de l'air de pièce qui plus préférablement entre dans le boîtier dans lequel la structure sorbante est contenue à travers l'ouverture d'air et la sortie et/ou trous et/ou fentes inclus dans le boîtier à cet effet et dans lequel le gaz de purge est aspiré ensemble avec le dioxyde de carbone désorbé ou le dioxyde de carbone désorbé et vapeur d'eau du boîtier à travers une sortie qui est connectée à un réseau de petites conduites.

13. Procédé selon une des revendications 10 à 12, dans lequel plusieurs unités d'extraction de dioxyde de carbone sont opérées dans au moins quelques-unes des pièces individuelles du bâtiment de manière cyclique temporellement décalée de sorte que toujours au moins une des unités est en mode d'adsorption.

14. Procédé selon une des revendications 10 à 13, dans lequel les temps de cycle des cycles d'adsorption/désorption sont adaptés aux cycles d'occupation du bâtiment de manière que l'adsorption prend place quand le bâtiment est majoritairement occupé et la désorption prend place quand il est majoritairement non occupé.
